# EUROPEAN PATENT APPLICATION

(11) **EP 1 582 449 A2**
(43) Date of publication of application: **05.10.2005**
(21) Application number: 05003922.1
(22) Date of filing: 23.02.2005
(51) Int. Cl.: B62M 9/12

(54) **Bicycle derailleur**

(30) Priority: 29.03.2004 US 811150
(71) Applicant: Shimano (Singapore) Private, Limited, Jurong Town (SG)
(72) Inventor: Hoe, Jimmy Sua Gin, 09-329, Jurong East New Town Singapore (SG)
(74) Representative: Hofmann, Harald

(57) **Abstract**

A bicycle derailleur (12) is provided with a base member (30), a linkage mechanism (34), a movable member (32) and a guide member (36). The base member (30) is configured and arranged to be attached to a bicycle frame (11). The linkage mechanism (34) is coupled to the base member (30). The movable member (32) is coupled to the linkage mechanism (34). The guide member (36) is pivotally supported on the movable member (32), and is biased relative to the movable member (32) in a first direction about a pivot axis (A). The movable member has first and second stoppers (51,52) and the guide member (36) having an abutment member (68a). The first stopper (51) is arranged to selectively contact the abutment member (68a) to restrict rotation of the guide member (36) in the first direction. The second stopper (52) is arranged to selectively contact the abutment member (68a) to restrict rotation of the guide member (36) in a second direction opposite to the first direction.

## Description

This invention generally relates to a bicycle derailleur. More specifically, the present invention relates to a rear bicycle derailleur that limits movement of the chain guide or cage in the event the derailleur is inadvertently deflected into a moving bicycle wheel.

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle. One component that has been extensively redesigned is the rear bicycle derailleur.

Typically, a rear bicycle derailleur has a base member and a chain guide or cage movably coupled to the base member via a linkage assembly. The base member is coupled to the frame of the bicycle. The rear derailleur is coupled to the rear triangular portion of the bicycle frame adjacent the rear wheel. The chain guide is configured to move the chain laterally over a plurality of rear sprockets. The chain guide of the rear derailleur usually includes a pair of guide plates with a guide pulley and a tension pulley mounted between the guide plates. The chain is wrapped around both pulleys in an S-shaped manner between the guide plates in order to efficiently guide the chain to the appropriate sprocket during shifting and in order to appropriately tension the chain. A spring typically biases the chain guide to an innermost or outermost position relative to the sprockets. A Bowden-type control cable with an outer sheath and an inner wire is typically coupled to the derailleur and to a conventional shift control device.

Due to the configuration of typical rear derailleurs, obstructions such as brush, debris, rocks, branches or the like sometimes contact them and cause the chain guide to move toward the rear wheel. If a sufficient force is applied to the rear derailleur, the inner chain guide plate and/or the tension pulley can be pushed into the rear wheel. In particular, if a sufficient force is applied to the chain guide by an obstruction, the inner chain guide plate and/or the tension pulley can contact the spokes of the rear wheel. Such contact can jam the rear wheel and/or the rear derailleur, resulting in decreased riding/shifting performance in that the rear derailleur can be damaged.

In view of the above, it will be apparent to those skilled in the art from this disclosure that there exists a need for an improved bicycle derailleur. This invention addresses this need in the art as well as other needs, which will become apparent to those skilled in the art from this disclosure.

### SUMMARY OF THE INVENTION

One object of the present invention is to provide a bicycle derailleur, that limits movement of the chain guide or cage in the event the derailleur is inadvertently deflected into a moving bicycle wheel.

Another object of the present invention is to provide a bicycle derailleur that includes the advantages of the present invention, and is still relatively simple and inexpensive to manufacture and assemble.

Still another object of the present invention is to provide a bicycle derailleur that includes the advantages of the present invention, and is still strong, yet relatively lightweight.

The foregoing objects can basically be attained by providing a bicycle derailleur that comprises a base member, a linkage mechanism, a movable member and a guide member. The base member is configured and arranged to be attached to a bicycle frame. The linkage mechanism is coupled to the base member. The movable member is coupled to the linkage mechanism. The guide member includes a pair of pulleys. The guide member is pivotally supported on the movable member, and is biased relative to the movable member in a first direction about a pivot axis. The movable member has first and second stoppers and the guide member having an abutment member. The first stopper is arranged to selectively contact the abutment member to restrict rotation of the guide member in the first direction. The second stopper is arranged to selectively contact the abutment member to restrict rotation of the guide member in a second direction opposite to the first direction.

These and other objects, features, aspects and advantages of the present invention will become apparent to those skilled in the art from the following detailed description, which, taken in conjunction with the annexed drawings, discloses preferred embodiments of the present invention.

Referring now to the attached drawings which form a part of this original disclosure:

Figure 1 is a side elevational view of a bicycle with a rear derailleur in accordance with a preferred embodiment of the present invention;

Figure 2 is an enlarged, outside elevational view of the rear derailleur of the bicycle illustrated in Figure 1;

Figure 3 is a further enlarged, partial front elevational view of the rear derailleur illustrated in Figures 1 and 2, with portions shown in cross-section for the purpose of illustration;

Figure 4 is a partial perspective view showing the connection of the movable member to the chain guide with the stopper pin (abutment member) of the chain guide being biased against the first stopper (first projection) of the movable member;

Figure 5 is a partial perspective view showing the connection of the movable member to the chain guide with the stopper pin (abutment member) of the chain guide contacting the second stopper (second projection) of the movable member;

Figure 6 is an enlarged perspective view of movable member the rear derailleur illustrated in Figures 2 and 3;

Figure 7 is an enlarged perspective view of the movable member the rear derailleur illustrated in Figures 2 and 3; and

Figure 8 is a cross-sectional view of the rear derailleur illustrated in Figures 2 and 3, as seen along section line 8-8 of Figure 3.

Selected embodiments of the present invention will now be explained with reference to the drawings. It will be apparent to those skilled in the art from this disclosure that the following descriptions and illustrations of the selected embodiments of the present invention are provided for illustration only and not for the purpose of limiting the invention as defined by the appended claims and their equivalents.

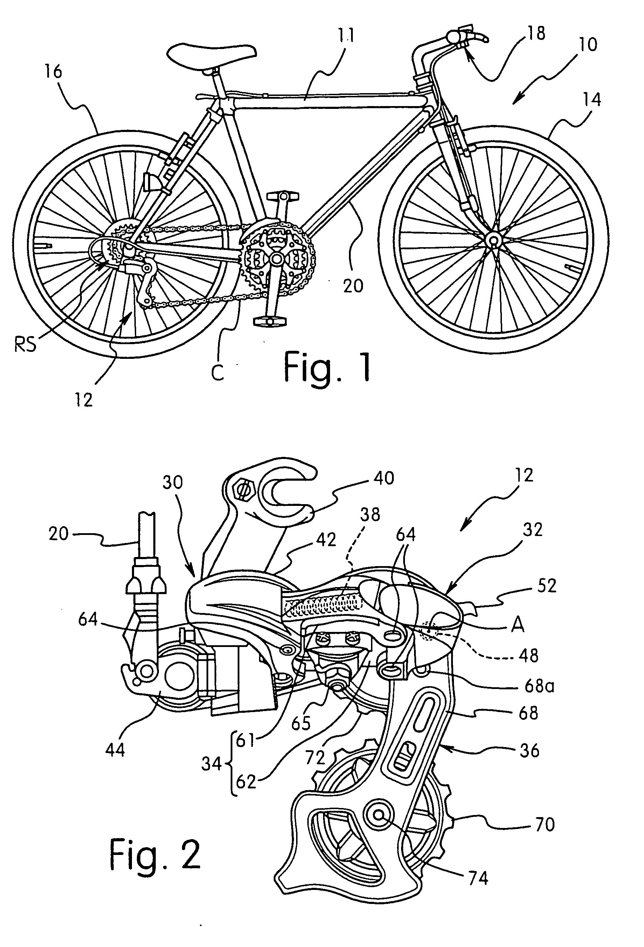

Referring initially to Figures 1-2, a bicycle 10 with a rear bicycle derailleur 12 is illustrated in accordance with a preferred embodiment of the present invention. The bicycle 10 is preferably a conventional multi-speed bicycle that includes a frame 11 with front and rear wheels 14 and 16 coupled to the frame 11 in a conventional manner. The frame 11 includes a front fork pivotally coupled thereto with a handlebar coupled to the front fork in a conventional manner to steer the front wheel 14. The rear wheel 16 is coupled to the rear triangular portion of the frame 11. The rear derailleur 12 of the present invention is designed to reduce the possibility that the rear derailleur 12 will be damaged if the rear derailleur 12 is deflected into the rear wheel 16 by debris or the like, as explained below.

A rear shift control device 18 is mounted on the handlebar to control the rear derailleur 12 via a control cable 20 (i.e., a Bowden cable) in a relatively conventional manner to move a chain C laterally over a plurality of rear sprockets RS that are coupled to the rear wheel 16. The rear sprockets RS are coupled to the rear wheel 16 via a freewheel (not shown) to selectively rotate the rear wheel 16 via the chain C in a conventional manner.

Since the various parts of the bicycle 10 are conventional, except for the rear derailleur 12, the remaining parts of the bicycle 10 will not be discussed and/or illustrated in detail herein, except as they relate to the rear derailleur 12. Moreover, it will be apparent to those skilled in the art from this disclosure that various modifications can be made to the various components or parts of the bicycle 10 without departing from the scope of the present invention.

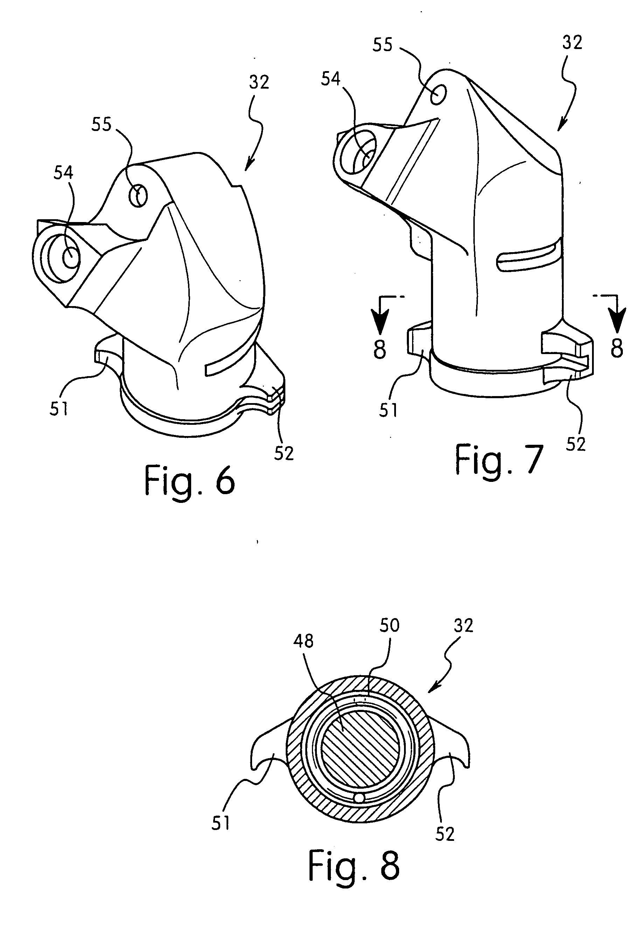

Referring now to Figures 2-8, the rear derailleur 12 of the present invention will now be explained in more detail. The rear derailleur 12 of the present invention basically includes a base member 30, a movable member 32, a linkage assembly 34, a chain guide or cage 36 and a biasing member or spring 38. The parts of the chain guide 36 are configured and arranged to limit movement of the chain guide 36 in the event the derailleur 12 is inadvertently deflected into the rear bicycle wheel 16.

The base member 30 is fixedly coupled to the frame 11 of the bicycle 10 for limited rotational movement, while the movable member 32 is movably coupled to the base member 30 via the linkage assembly 34. The chain guide 36 is pivotally coupled to the movable member 32. The biasing member or spring 38 normally biases the linkage assembly 34 to urge the movable member 32 such that the chain guide 36 held adjacent the outer most (smallest) of the rear sprockets RS.

The rear derailleur 12 is conventional, except for the movable member 32 of the present invention. In particular, the rear derailleur 12 is basically identical to the rear derailleur (e.g., model RD-TX50) of the Tourney TX™ component group available from Shimano, Inc., except the rear derailleur 12 of the present invention is equipped with the movable member 32 in accordance with the present invention rather than a conventional movable member. Thus, the basic operations of the rear derailleur 12 are well known in the prior art. Accordingly, the rear derailleur 12 will not be discussed and/or illustrated in detail herein, except for the new movable member 32 of the present invention. Moreover, it will be apparent to those skilled in the art from this disclosure that various modifications can be made to the rear derailleur 12 without departing from the scope of the present invention.

As best seen in Figure 2, the base member 30 is illustrated as being constructed of a frame fixing part (hanger bracket) 40 and a housing part 42. The frame fixing part 40 is fixedly coupled to the frame 11 in a conventional manner. The housing part 42 is pivotally coupled to the frame fixing part 40 with an internal biasing mechanism in a conventional manner. The housing part 42 has a cable mounting portion 44 coupled thereto in a conventional manner. Of course, it will be apparent to those skilled in the art from this disclosure that the base member 30 could have other configurations as needed and/or desired. In any case, the housing part 42 of the base member 30 is preferably coupled to the frame 11 by the frame fixing part 40 for limited rotational movement.

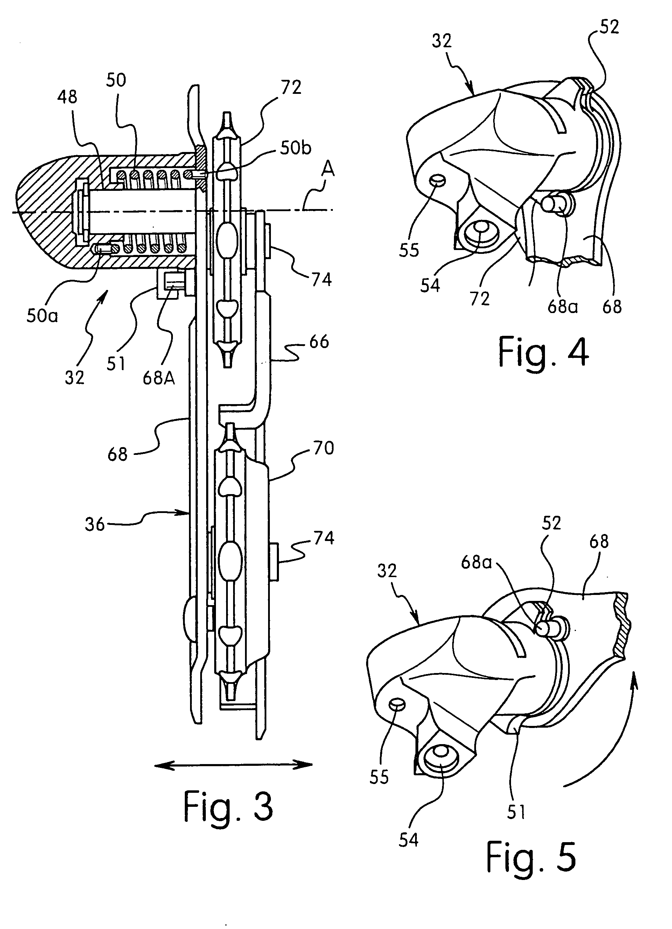

As best seen in Figures 3-5, the movable member 32 is movably mounted to the chain guide 36 such that the chain guide 36 can pivot relative to the movable member 32 about the pivot axis A. In particular, a pivot pin or axle 48 is fixedly coupled to the chain guide 36 with the movable member 32 mounted thereon. A spring or biasing element 50 is disposed about the pin 48. In particular, the biasing element 50 is preferably a torsion spring that has a first end 50a engaged in a hole formed in the movable member 32 and a second end 50b engaged in a hole formed in the chain guide 36. The movable member 32 is preferably a one-piece member constructed of a hard rigid material. The movable member 32 has a blind bore for receiving the pivot pin or axle 48 and the biasing element 50 therein. The movable member 32 is also provided with a first stopper 51 and a second stopper 52. The second stopper 52 is spaced approximately 180 degrees about the pivot axis A from the first stopper 51. The first stopper 51 is normally engaged with the chain guide 36 by the biasing element, when no force is applied between the chain guide 36 and the movable member 32. The second stopper 52 is designed to limit the relative movement between the movable member 32 and the chain guide 36, when the chain guide 36 is rotated relative to the movable member 32 about the pin 48 and against the urging force of the biasing element 50. The first and second stoppers 51 and 52 are integrally formed with the housing portion of the movable member 32 as a one-piece, unitary member. The movable member 32 also includes a pair of pivot holes 54 and 56 for pivotally coupling the linkage assembly 34 thereto in a conventional manner.

The linkage assembly 34 includes a pair of links 61 and 62 that are pivotally coupled at first ends to the base member 30 and pivotally coupled at their other ends to the movable member 32. Four pins 64 are used to pivotally couple the links 61 and 62 between the base member 30 and the movable member 32. The biasing member 38 (i.e., a coil spring) is disposed between the links 61 and 62 for urging the movable member 32 and the chain guide 36 in one direction. The inner wire of the cable 20 moves links 61 and 62 to move the chain guide 36 in the other direction against the urging force of the biasing member 38. Thus, movement of the movable member 32 locates the chain guide 36 in the correct gear position in a conventional manner. In the illustrated embodiment, the link 61 is an outer link, while the link 62 is an inner link. As seen in Figure 2, the outer link 61 preferably has a cable fixing bolt 65 for coupling the inner wire of the cable 20 thereto in a conventional manner. Of course, it will be apparent to those skilled in the art from this disclosure that various modifications can be made to the linkage assembly 34 without departing from the scope of the present invention.

The base member 30, the movable member 32 and the linkage assembly 34 form parts of a shiftable portion of the rear derailleur 12 that is configured and arranged to move between at least a top position and a low position. Specifically, the control cable 20 and the biasing member 38 cooperate in response to pulling/releasing the control cable 20 by the control device 18 to move the shiftable portion (i.e., the movable member 32 and the linkage assembly 34) between a top position and a low position, as best understood by the arrow in Figure 3. Thus, the chain guide 36 is selectively moved laterally between at least a top position and a low position by the shiftable portion in a conventional manner.

Of course, it will be apparent to those skilled in the art from this disclosure that various modifications can be made to the parts of the so-called shiftable portion of the present invention without departing from the scope of the present invention. In other words, it will be apparent to those skilled in the art from this disclosure that the chain guide 36 of the present invention can be used in various derailleur designs without departing from the scope of the present invention.

Referring to Figure 3, the chain guide 36 of the present invention will now be discussed in more detail. The chain guide 36 is pivotally coupled to the movable member 32 for limited rotation relative thereto in a conventional manner, as seen in Figures 2 and 3. The chain guide 36 basically includes an inner guide plate 66, an outer guide plate 68, a tension pulley or sprocket 70 and a guide pulley or sprocket 72. The pulleys 70 and 72 are rotatably coupled between the guide plates 66 and 68. The pulleys 70 and 72 engage chain C in a conventional S-type configuration. The inner and outer guide plates 66 and 68 are coupled together by a pair of fasteners 74. Preferably, the fasteners 74 are bolts that are partially threaded. The pulleys 70 and 72 are preferably rotatably mounted on the shafts of the fasteners 74 between the inner and outer guide plates 66 and 68.

The outer guide plate 68 is coupled to the movable member 32 via the pin or axle 48 in a conventional manner, as seen in Figure 3. The outer guide plate 68 has a projection or abutment member 68a. The abutment member 68a normally contacts the first stopper member 51 due to the urging force of the biasing element 65 between the movable member 32 and the chain guide 36. However, if the chain guide 36 is rotated in a counterclockwise direction due to some external force, the abutment member 68a will contact the second stopper member 52 to prevent additional relative rotation between the chain guide 36 and the movable member 32.

While in the illustrated embodiment the abutment member 68a is an abutment pin, it will be apparent to those skilled in the art from this disclosure that the abutment member 68a could be formed by bending a portion of the outer guide plate 68 to form the abutment.

The pulleys 70 and 72 are rotatably mounted between the guide plates 66 and 68. The tension pulley 70 preferably includes thirteen teeth that engage the chain C. The guide pulley 72 preferably includes eleven teeth that engage the chain C. Thus, the guide pulleys 70 and 72 will not be discussed in further detail herein. In other words, both of the pulleys 70 and 72 are basically conventional, and will not be discussed and/or illustrated in detail herein.

As used herein, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention.

The terms of degree such as "substantially", "about" and "approximately" as used herein mean a reasonable amount of deviation of the modified term such that the end result is not significantly changed. These terms should be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A bicycle derailleur comprising:
a base member configured and arranged to be attached to a bicycle frame;
a linkage mechanism coupled to the base member;
a movable member coupled to the linkage mechanism; and
a guide member including a pair of pulleys, the guide member being pivotally supported on the movable member and being biased relative to the movable member in a first direction about a pivot axis,
the movable member having first and second stoppers and the guide member having an abutment member, the first stopper being arranged to selectively contact the abutment member to restrict rotation of the guide member in the first direction, the second stopper being arranged to selectively contact the abutment member to restrict rotation of the guide member in a second direction opposite to the first direction.

2. The bicycle derailleur according to claim 1, wherein the movable member has a pivot pin attached to the guide member, a housing mounted on the pivot pin and attached to the linkage mechanism, and a basing element arranged between the movable member and the guide member to bias the guide member relative to the movable member such that the first stopper is normally in contact with the abutment member to restrict rotation of the guide member in the first direction.

3. The bicycle derailleur according to claim 2, wherein the housing of the movable member includes the first and second stoppers.

4. The bicycle derailleur according to claim 1, 2 or 3, wherein the guide member includes an inner guide plate and an outer guide plate with the pulleys mounted therebetween.

5. The bicycle derailleur according to any one of claims 1 to 4, wherein the guide member includes an inner guide plate and an outer guide plate with the abutment member being mounted on the outer guide plate.

6. The bicycle derailleur according to anyone of claims 1 to 5, wherein the abutment member is abutment pin.

7. The bicycle derailleur according to anyone of claims 1 to 6, wherein the second stopper is spaced approximately 180° about the pivot axis from the first stopper.

8. The bicycle derailleur according to any one of claims 1 to 7 wherein the linkage mechanism includes a pair of links, in particular pivotally coupled at first ends to the base member and pivotally couples at their other ends to the movable member.
